# EUROPÄISCHE PATENTANMELDUNG

(11) **EP 3 409 138 A1**
(43) Veröffentlichungstag der Anmeldung: **05.12.2018**
(21) Anmeldenummer: 17202489.5
(22) Anmeldetag: 20.11.2017
(51) Int. Cl.: A44B 11/25, B60N 2/28

(54) **VORRICHTUNG ZUR SICHERUNG DES GURTSCHLOSSES EINES KINDERSITZES GEGEN ÖFFNEN**

(30) Priorität: 03.06.2017 DE 102017005370
(71) Anmelder: Herrmann, Mojique, 76137 Karlsruhe (DE)
(72) Erfinder: Herrmann, Mojique, 76137 Karlsruhe (DE)
(74) Vertreter: Durm Patentanwälte PartG mbB

(57) **Zusammenfassung**

Eine Vorrichtung zur Sicherung des Gurtschlosses (24) eines Kinderautositzes gegen Öffnen durch das angegurtete Kind umfasst ein Stück zugeschnittenes Textilgewebe (30) mit einem zentralen Vorderteil (31) zum Auflegen auf die Vorderseite des geschlossenen Gurtschlosses (24) so, dass zumindest die Entriegelungstaste vollständig abgedeckt ist, ferner mit zwei Seitenteilen (32, 33), die um das Gurtschloss (24) herum umklappbar sind und deren freie Enden auf der Rückseite des Gurtschlosses mittels Klettverschluss lösbar miteinander verbindbar sind, sowie mit einem Rückteil (34), das ebenfalls umklappbar ist und dessen freies Ende auf der Rückseite des Gurtschlosses (24) an den umgeklappten und miteinander verbundenen Seitenteilen (32, 33) mittels eines zweiten Klettverschlusses fixierbar ist. Die Vorrichtung umhüllt das Gurtschloss (24) fast ganz und verhindert dadurch zuverlässig ein Öffnen durch das Kind.

## Beschreibung

Die Erfindung betrifft eine Vorrichtung zur Sicherung des Gurtschlosses eines Kinderautositzes gegen Öffnen durch das angegurtete Kind und ist insbesondere für den Einsatz bei solchen Kinderautositzen vorgesehen, die mit einem 3-Punkt- oder 5-Punkt-Gurtsystem ausgestattet sind. Entsprechend ausgestattete Kinderautositze sind solche der Gruppe I für Kinder mit einem Körpergewicht zwischen 9 und 18 Kg und der Gruppe II für die Gewichtsklasse 15 bis 25 Kg. Es gibt auch Kinderautositze der Gruppe I/II, welche für beide Gewichtsklassen, also von 9 bis 25 Kg geeignet und zugelassen sind.

Mit 3- oder 5-Punkt-Gurtsystemen ausgerüstete Kindersitze bieten den besten Schutz für Kinder in dieser Gewichtsklasse.

Die Gurtschlösser für Kinderautositze der Gruppe I und II sind im Prinzip fast alle gleich ausgebildet, unabhängig vom Hersteller des Sitzes. Die freien Enden der zwei bzw. vier oberen Gurte sind mit metallenen Haken bzw. Ösen ausgestattet; diese werden zusammengefasst und gemeinsam in das Gurtschloss eingesteckt und verrastet. Auf der Außenseite des Gurtschlosses befindet sich eine Entriegelungstaste, die durch Drücken gegen die Wirkung einer Feder das Gurtschloss öffnet und die Gurte wieder freigibt.

Kinder, die mit Autositzen der Gruppe I (bis 18 Kg) oder gar der Gruppe II (bis 25 Kg) im Auto sicher transportiert werden sollen, sind oft schon so groß, dass sie sich selbsttätig abschnallen können, indem sie durch Drücken der Entriegelungstaste, die üblicherweise zugänglich und gut sichtbar ist, das Gurtschloss öffnen. Ein Grund, warum Kinder das gerne tun, ist auch, dass die straffen Gurte und vor allem das schwer auf dem Bauch liegende Gurtschloss oft als unbequem empfunden werden.

Es ist klar, dass das selbsttätige Abschnallen eines im Kinderautositz sitzenden Kindes während der Fahrt gefährlich ist und möglichst nicht vorkommen sollte. Geschieht es doch, bleibt es vom verantwortlichen Fahrer oft unbemerkt, da dieser sich auf den Verkehr konzentrieren muss und das vorschriftsmäßig auf dem Rücksitz mitfahrende Kind nur schlecht im Auge behalten kann. Anders als bei den im Fahrzeug fest verbauten Sicherheitsgurten, verfügen Kinderautositze und die dort verwendeten Gurtsysteme in der Regel nicht über ein automatisches Warnsystem, das ein unbemerktes Abschnallen des Kindes akustisch oder optisch dem Fahrer melden könnte. Aber selbst wenn das Öffnen des Gurtschlosses vom Fahrer bemerkt wird, bleibt das Problem, dass der Fahrer dann eigentlich reagieren müsste, dies aber gar nicht so schnell kann.

Zahlreiche Eltern berichten davon, dass ihre Kinder sich selbständig aus dem Kindersitz befreien, auch während der Fahrt. Insbesondere größere Kinder bringen mühelos die Kraft auf, die man benötigt, um das Gurtschloss zu öffnen. Die rote Farbe des Öffnungsmechanismus, insbesondere der Entriegelungstaste, lädt geradezu dazu ein, dass die Kinder auf den Mechanismus drücken. Die derzeit bei Kinderautositzen üblichen Gurtsysteme und Gurtschlösser stellen also ein nicht unerhebliches Sicherheitsrisiko dar.

Ein Eingriff in die Konstruktion des Gurtschlosses ist für den Käufer bzw. Benutzer eines Autokindersitzes natürlich nicht möglich. Gleichwohl haben viele Eltern den dringenden Wunsch, das Gurtschloss eines Kinderautositzes gegen Öffnen durch das angegurtete Kind zu sichern.

Das technische Problem besteht also darin, eine leicht nachrüstbare Vorrichtung zur wirksamen Sicherung des Gurtschlosses eines Kinderautositzes gegen Öffnen durch das angegurtete Kind zu schaffen, welche einfach zu bedienen ist und kostengünstig hergestellt werden kann. Zudem soll der Komfort für das angegurtete Kind erhöht werden.

Diese Aufgabe wird gelöst durch eine Vorrichtung mit den im Anspruch 1 angegebenen Merkmalen. Vorteilhafte und zweckmäßige Weiterbildungen der erfindungsgemäßen Vorrichtung enthalten die Unteransprüche.

Die erfindungsgemäße Vorrichtung umfasst ein Stück Textilgewebe, das einen speziellen Zuschnitt aufweist. Der Zuschnitt umfasst ein zentrales Vorderteil, zwei Seitenteile und ein mittig zwischen den beiden Seitenteilen angeordnetes Rückteil. Die freien Enden der beiden Seitenteile sind durch wenigstens einen reversiblen Schnellverschluss lösbar miteinander verbindbar sind. Das Rückteil hat an seinem freien Ende einen weiteren reversiblen Schnellverschluss zum Fixieren bzw. zur lösbaren Verbindung mit den Seitenteilen.

Das Stück Textilgewebe ist zunächst eben. Die Montage am Gurtschloss geschieht durch Umklappen der beiden Seitenteile um das Gurtschloss herum und anschließendes Verbinden der Enden der Seitenteile auf der Rückseite des Gurtschlosses mittels eines reversiblen Schnellverschlusses. Dabei deckt das zentrale Vorderteil die Vorderseite des geschlossenen Gurtschlosses so ab, dass zumindest die Entriegelungstaste vollständig abgedeckt ist.

Solange nur die Seitenteile umgeklappt und miteinander verbunden sind, lässt sich das Stück Textilgewebe noch gegenüber dem Gurtschloss verschieben, das heißt, das Gurtschloss kann noch relativ ungehindert betätigt werden. Sobald nun das Rückteil ebenfalls um das Gurtschloss herum nach hinten umgeklappt wird und anschließend das freie Ende des Rückteils, gleichfalls auf der Rückseite des Gurtschlosses, an einem oder an beiden der zuvor schon umgeklappten und miteinander verbundenen Seitenteile fixiert wird, ist automatisch die Entriegelungstaste an der Vorderseite des geschlossenen Gurtschlosses vollständig abgedeckt und nicht mehr zugänglich.

Wenn die Gurte straffgezogen sind, liegt das Gurtschloss, das nun weitgehend in das Textilgewebe eingehüllt ist, ziemlich eng auf dem Bauch des angegurteten Kindes. Die geschlossenen Schnellverschlüsse, die alle an der Rückseite des Gurtschlosses liegen, sind für das Kind nicht zugänglich; es müsste dazu das Gurtschloss verdrehen, was aber bei straffgezogenen Gurten nicht möglich ist. Der Zugang zur Entriegelungstaste des Gurtschlosses ist verwehrt, so dass diese von dem angegurteten Kind nicht betätigt werden kann; das Gurtschloss ist somit gegen ein Öffnen durch das im Kinderautositz vorschriftsmäßig angegurtete Kind zuverlässig gesichert.

Die Anbringung der erfindungsgemäßen Vorrichtung durch Auflegen auf das Gurtschloss, Umklappen der Seitenteile und des Rückteils und Verschließen der Schnellverschlüsse ist für einen Erwachsenen leicht und in wenigen Sekunden möglich.

Die erfindungsgemäße Sicherheitsvorrichtung ist so ausgebildet, dass sie nur einmalig am unteren Teil des Gurtschlosses angebracht und dort dauerhaft verbleiben kann. Dabei umschlingen die nach hinten umgeklappten Seitenteile den unteren Teil des Gurtschlosses, wobei der mit diesem Teil des Gurtschlosses verbundene Schrittgurt zwischen den beiden Seitenteilen der Vorrichtung hindurch verläuft. Die oberen Teile des Gurtschlosses mit den Schlaufen für die Schulter- und/oder Beckengurte und den zugehörigen Steckzungen bzw. Rastplatten bleiben zunächst ungehindert zugänglich; ebenso bleibt die Entriegelungstaste des Gurtschlosses zugänglich. Zur Aktivierung des Sicherheitssystems muss dann nur noch das mittige Rückteil um das Oberteil des geschlossenen Gurtschlosses geklappt und auf der Rückseite an dem Seitenteil bzw. bei den Seitenteilen fixiert werden. Die derart vormontierte Vorrichtung ist so im täglichen Betrieb in Sekundenschnelle mit einem Griff zu aktivieren. Umgekehrt kann das Gurtschloss auch schnell wieder geöffnet werden; hierzu ist lediglich das Rückteil von den Seitenteilen mit einem kräftigen Ruck zu lösen und nach vorne bzw. nach unten zu klappen. Um an die auf der Rückseite des Gurtschlosses gelegene Schnellverbindung zwischen Seiten- und Rückteil zu gelangen, kann es notwendig sein, zuvor die straffen Gurte etwas zu lockern.

Ein weiterer Vorteil der Erfindung besteht darin, dass es infolge der vollständigen Abdeckung der Entriegelungstaste des Gurtschlosses für das Kind keine optischen Anreize mehr gibt, den Mechanismus zu bedienen.

Im Falle eines Unfalls öffnen Ersthelfer das Gurtsystems eines Autokindersitzes - ebenso wie auch die im Fahrzeug eingebauten Sitzgurte - nicht etwa durch Öffnen des Gurtschlosses; gemäß den einschlägigen Anweisungen (Handbuch) für Ersthelfer werden solche Gurte grundsätzlich aufgeschnitten, um eine verunglückte Person möglichste schnell zu bergen. Kinder werden üblicherweise sogar mitsamt dem Kindersitz aus dem Auto genommen. Die erfindungsgemäße Vorrichtung behindert also im Notfall die Helfer nicht, sodass sicherheitstechnisch auch im Falle eines Unfalls kein Nachteil zu befürchten ist.

In einer bevorzugten Ausführung der erfindungsgemäßen Vorrichtung sind die reversiblen Schnellverschlüsse an den Seitenteilen und/oder auf dem Rückteil des Textilgewebe-Zuschnitts als Klettverschlüsse ausgebildet. Bevorzugt sind dabei die Flauschbänder auf der Oberseite des Textilgewebes und die Hakenbänder auf der Unterseite des Textilgewebes aufgenäht. Beim Umklappen der Seitenteile bzw. des Rückteils und Zusammenführung auf der Rückseite des Gurtschlosses legen sich die Flauschbänder und die korrespondierenden Hakenbänder richtig aufeinander und verhaken sich nahezu von selbst. Die Klettverschlüsse lassen sich aber auch wieder schnell und einfach öffnen, sobald man mit zwei Fingern zwischen den Bauch des angegurteten Kindes und das aufliegende Gurtschloss greifen kann. Klettverschlüsse zeichnen sich durch starke Haftkraft senkrecht zur Ebene der Flausch- bzw. Hakenbänder aus. Das im Kindersitz angegurtete Kind kann diese Haftkraft mit den Fingern nicht überwinden.

Vorteilhaft sind die Enden der Seitenteile durch zwei nebeneinander angeordnete Klettverschlüsse miteinander verbindbar.

Gemäß einer weiteren vorteilhaften Ausführungsform der erfindungsgemäßen Vorrichtung ist das Textilgewebe leicht elastisch. Zweckmäßig hat es eine Polsterung. Bevorzugt umfasst das Textilgewebe ein Meshgewebe mit Wabenstruktur. Besonders bevorzugt wird eine Ausführung mit einem zweilagigen Textilgewebe, bei dem die erste Lage aus Meshgewebe und die zweite Lage aus glattem Stoff besteht. Dabei weist das Meshgewebe zweckmäßig nach außen und bildet dadurch eine angenehme und luftdurchlässige Polsterung des harten Gurtschlosses, was den Komfort des im Kindersitz sitzenden angegurteten Kindes erheblich erhöht.

Der Zuschnitt des Textilgewebes ist zweckmäßig an die Form des Gehäuses des geschlossenen Gurtschlosses derart angepasst, dass das Gewebe bei geschlossenen Schnellverschlüssen das Gurtschloss straff ummantelt. Besonders in Verbindung mit dem Einsatz eines leicht elastischen Textilgewebes ergibt sich somit ein hervorragender Sitz des Textilstücks auf dem Gurtschloss.

Ein Ausführungsbeispiel der erfindungsgemäßen Vorrichtung zur Sicherung des Gurtschlosses eines Kinderautositzes wird nachstehend anhand der beigefügten Zeichnungen näher erläutert. Es zeigen:
- Figur 1a: einen Kinderautositz mit 5-Punkt-Gurten, stark vereinfacht;
- Figur 1b: das Gurtschloss des Kinderautositzes von Figur 1a, schematisch;
- Figur 2a: ein 3-Punkt-Gurtsystem für Autokindersitze mit offenem Gurtschloss, in Draufsicht;
- Figur 2b: das Gurtsystem von Figur 2a mit geschlossenem Gurtschloss;
- Figur 3a: eine Vorrichtung zur Sicherung des Gurtschlosses eines Kindersitzes, von oben;
- Figur 3b: die Unterseite der Vorrichtung von Figur 3a, von unten;
- Figur 4a-4d: die Montage der Vorrichtung gemäß Figur 3a an einem geschlossenen 3-Punkt-Gurtschloss gemäß Figur 2b;
- Figur 5a-5c: die Bildung einer dreidimensionalen Hülle durch die Vorrichtung gemäß Figur 3a, in drei perspektivischen Ansichten aus verschiedenen Betrachtungswinkeln.

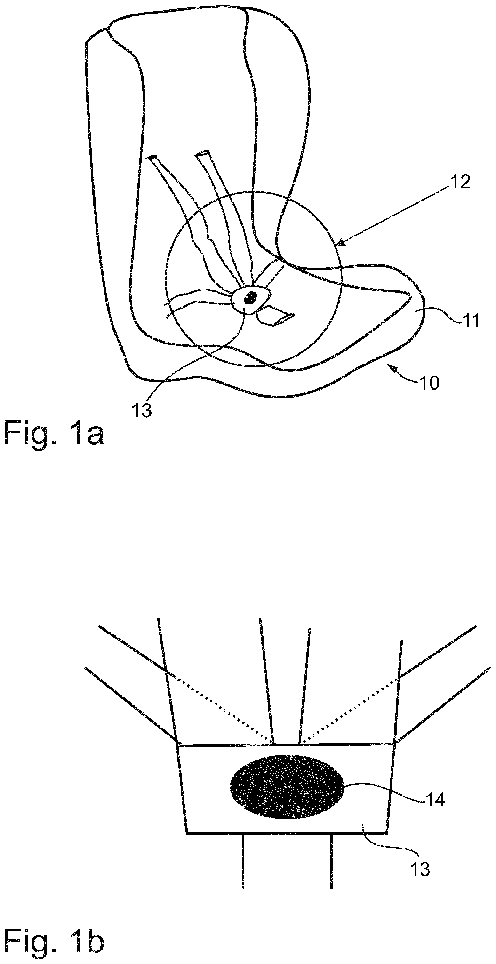

Der in Figur 1 stark vereinfacht dargestellte Kinderautositz dient zum Transport eines kleinen oder auch schon etwas größeren Kinds mit einem Körpergewicht zwischen 9 und maximal 25 Kg. Der Kinderautositz 10 hat eine Sitzschale 11, die auf der Sitzfläche eines der Sitze des Autos, vorzugsweise auf der Rückbank, aufliegt und mittels des dort festeingebauten Sicherheitsgurtes im Auto befestigt werden kann. An der Sitzschale 11 sind 5-Punkt-Gurte 12 befestigt, die mittels eines zentralen Gurtschlosses 13 geschlossen werden.

Wie aus Figur 1b ersichtlich, ist an der frei zugänglichen Vorderseite des Gurtschlosses 13 eine Entriegelungstaste 14 angeordnet. Beim Niederdrücken der Entriegelungstaste 14 wird das Gurtschloss 13 entriegelt und gibt die 5-Punkt-Gurte 12 frei.

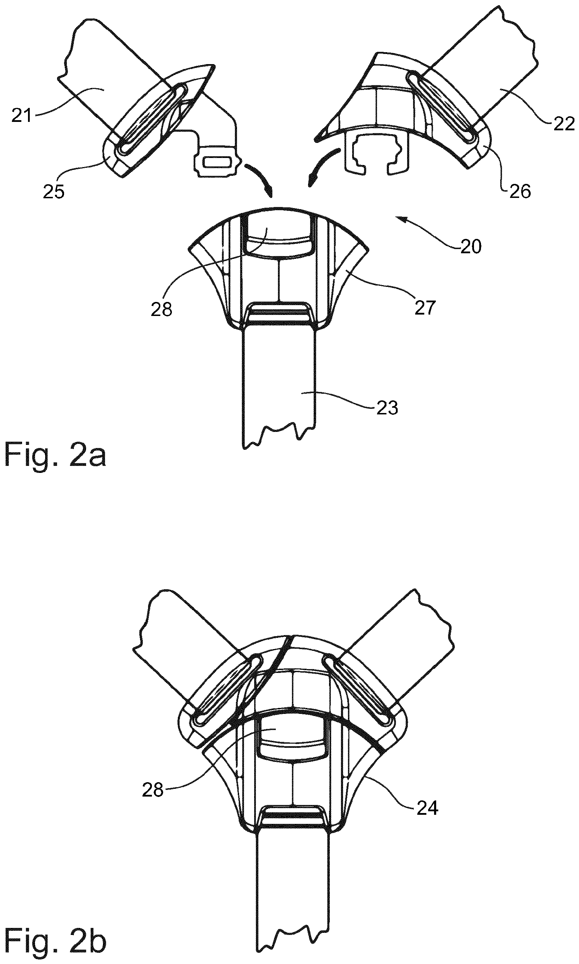

Ein Kinderautositz kann alternativ mit 3-Punkt-Gurten 20 als Rückhaltesystem für das Kind ausgerüstet sein, wie es in den Figuren 2a und 2b dargestellt ist. Die 3-Punkt-Gurte 20 umfassen zwei Schultergurte 21 und 22 sowie einen zwischen den Beinen des Kindes verlaufenden Schrittgurt 23. Das zugehörige Gurtschloss 24 umfasst zwei Gurtschnallen 25 und 26 für die Schultergurte 21 und 22, welche jeweils mit Steckzungen ausgerüstet sind. Die 3-Punkt-Gurte 20 werden geschlossen, indem die Gurtschnallen 25 und 26 in ein Gurtschloss-Unterteil 27 eingeführt werden und dort verrasten. Durch Niederdrücken einer Entriegelungstaste 28 gegen Federkraft kann das Gurtschloss 24 wieder geöffnet werden, um die 3-Punkt-Gurte 20 freizugeben.

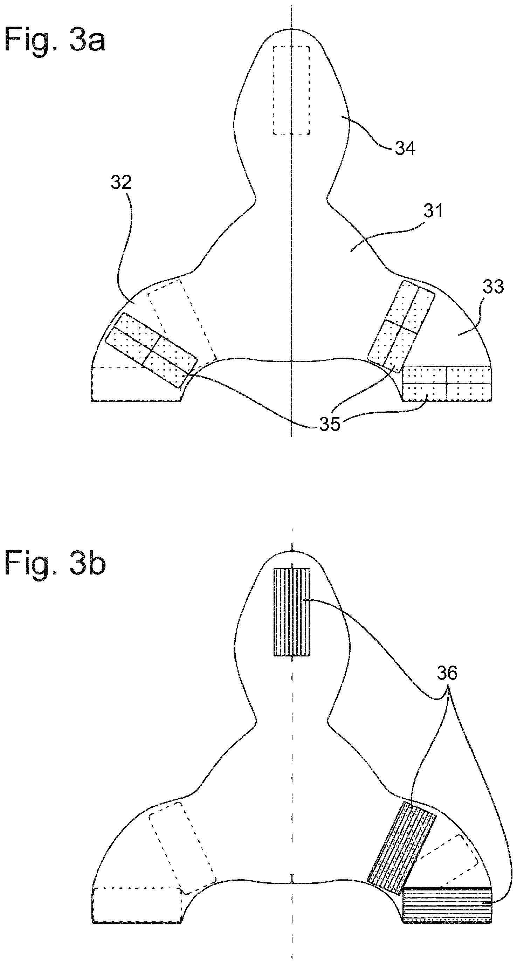

Die erfindungsgemäße Vorrichtung zur Sicherung des Gurtschlosses eines Kinderautositzes gegen Öffnen durch das angegurtete Kind umfasst gemäß den Figuren 3a und 3b ein Stück Textilgewebe 30, das entsprechend der Kontur des geschlossenen Gurtschlosses, in diesem Fall des Gurtschlosses 24 gemäß Figur 2b, zugeschnitten ist. Das Textilgewebe 30 ist zweilagig und besteht aus einem Meshgewebe als Polsterlage und einem glatten Stoff. Das Meshgewebe bildet die Oberseite (Figur 3a) während der glatte Stoff die Unterseite bildet (Figur 3b).

Das zugeschnittene Stück Textilgewebe 30 hat ein zentrales Vorderteil 31, das näherungsweise der Kontur des geschlossenen Gurtschlosses 24 entspricht, also im Prinzip die Form eines gleichseitigen Dreiecks hat. Ausgehend von dem Vorderteil 31 erstrecken sich ein linkes Seitenteil 32 und ein rechtes Seitenteil 33 symmetrisch nach außen, wobei die Seitenteile 32, 33 in der Art eines Viertel-Kreis-Abschnitts nach unten gekrümmt sind. Mittig zwischen den beiden Seitenteilen 32, 33 erstreckt sich ein vergleichsweise schmales Rückteil 34 entlang der Mittelachse nach oben. Dieses Rückteil 34 ist in der Art eines Lappens oder einer Zunge mit leicht spitz zulaufendem Ende geformt.

Vorderseite und Rückseite des Stücks Textilgewebe 30 lassen sich mittels Klettverschlüssen zu einer dreidimensionalen Hülle verbinden. Hierzu sind auf der Oberseite des Textilgewebes 30 drei kurze Stücke Flauschbänder 35 aufgenäht (Figur 3a) und auf der Unterseite korrespondierende Hakenbänder 36 (Figur 3b).

Das linke Seitenteil 32 trägt im Bereich seines Endes ein erstes Flauschband 35. Zwei weitere Flauschbänder 35 sind an der Oberseite des rechen Seitenteils 33 angeordnet, wobei ein Flauschband 35 parallel zur Endkante des Seitenteils 33 verläuft und das andere dritte Flauschband 35 daneben angeordnet ist. Die beiden Flauschbänder 35 des rechen Seitenteils 33 bilden einen stumpfen Winkel.

Das Rückteil 34 trägt nur ein Hakenband 36, das auf der Rückseite aufgenäht ist (Figur 3b) und entlang der Mittellinie verläuft. Zwei weitere Hakenbänder 36 sind auf die Rückseite des linken Seitenteils 32 aufgenäht (Figur 3b), wobei Größe, Form und Anordnung spiegelbildlich zu den Flauschbändern 35 auf der Vorderseite des rechten Seitenteils 33 sind (vgl. Figur 3a).

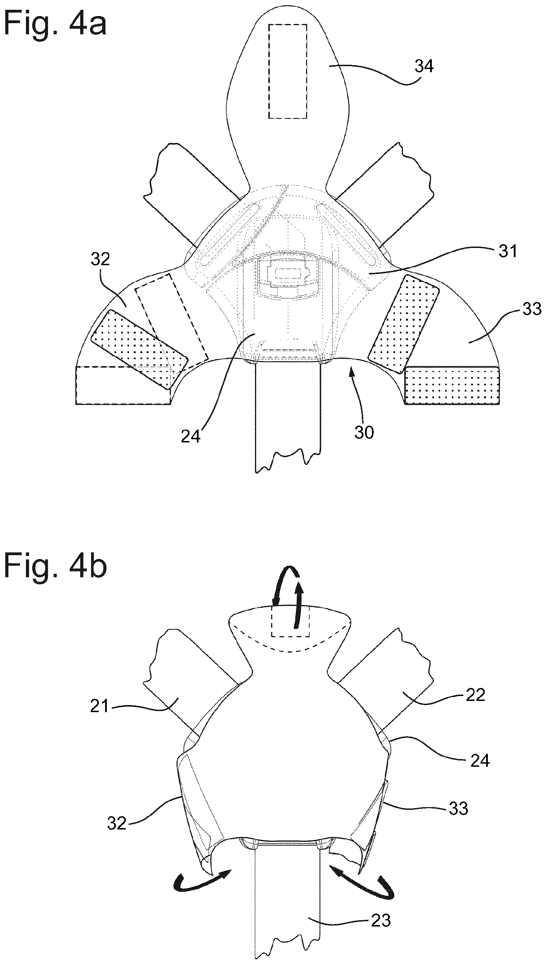

Zur Aktivierung der Sicherungsvorrichtung wird zunächst das zentrale Vorderteil 31 flach auf die Vorderseite des geschlossenen Gurtschlosses 24 aufgelegt, wie in Figur 4a zu sehen. Das Vorderteil 31 deckt das Gurtschloss 24 vollständig ab und damit auch die Entriegelungstaste 28 (vgl. Figur 2b).

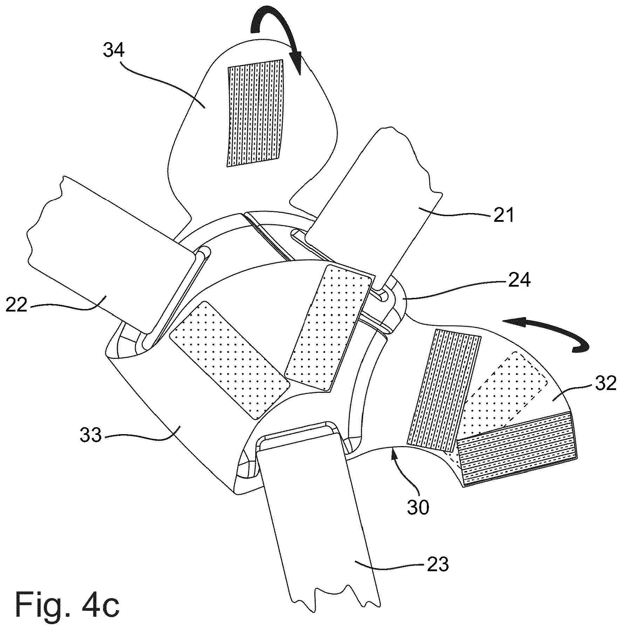

Das linke Seitenteil 32 und das rechte Seitenteil 33 werden nun um das Gurtschloss 24 herum nach hinten umgeklappt (Figur 4b) und dann auf der Rückseite des Gurtschlosses 24 mittels des Klettverschlusses aus Flauschbändern 35 und Hakenbändern 36 miteinander verbunden, wie in Figur 4b und 4c durch Pfeile angedeutet. Die freien Enden der Seitenteile 32, 33 überdecken sich dabei ein Stück.

Zuletzt wird auch das Rückteil 34 um das Gurtschloss 24 herum nach hinten umgeklappt, wie durch Pfeile angedeutet. Das freie Ende des vollständig nach hinten, also um 180 Grad umgeklappten Rückteils 34 wird auf die vorher miteinander verbundenen Enden der Seitenteile 32, 33 aufgedrückt, wobei sich das Hakenband 36 des Rückteils 34 mit dem zugehörigen Flauschband 35 auf der Vorderseite des linken Seitenteils 32 reversibel verbindet.

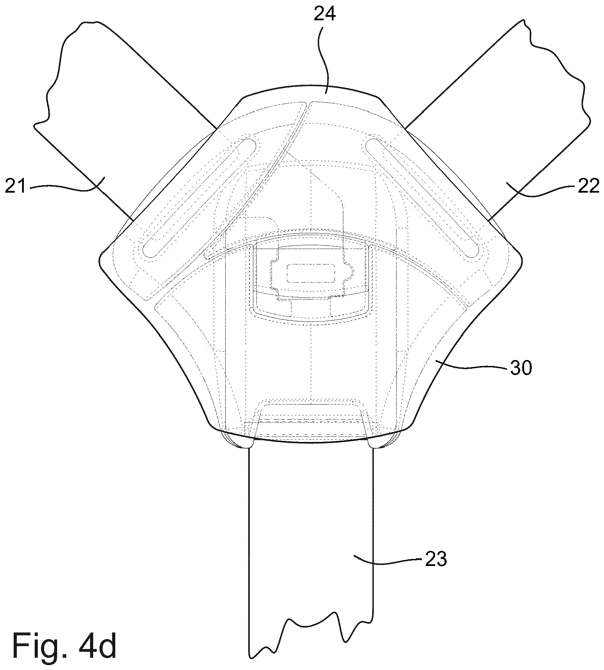

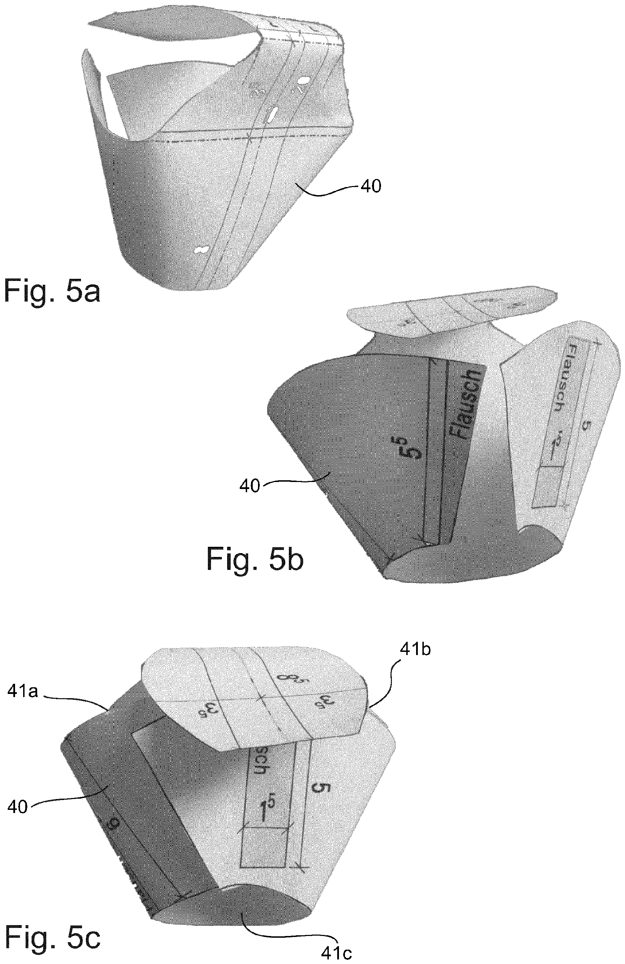

Aus Figur 4d wird ersichtlich, dass nach Schließen der Klettverschlüsse das Gehäuse des Gurtschlosses 24 rundum durch das Textilgewebe 30 ummantelt ist. Die Schultergurte 21, 22 und der Schrittgurt 23 bleiben dabei aufgrund der besonderen Form des Zuschnitts des Textilgewebes 30 von der Ummantelung ausgespart und bleiben sogar in den Schlaufen des Gurtschlosses 24 beweglich. Möglich wird dies dadurch, dass bei der Umformung des zunächst ebenen Textilgewebes 30 (siehe Figur 4a) durch teilweises Umklappen um 180 Grad eine dreidimensionale Hülle 40 entsteht, wie in den Prinzipbildern der Figuren 5a, 5b und 5c zu sehen ist. Diese Hülle 40 umschließt insbesondere die Vorderseite und die Rückseite des Gurtschlosses nahezu vollständig, hat aber drei Aussparungen 41a, 41b, 41c für den Durchtritt der Gurte.

### Bezugszeichen

- 10: Kinderautositz
- 11: Sitzschale
- 12: 5-Punkt-Gurte
- 13: Gurtschloss (5-Punkt)
- 14: Entriegelungstaste

- 20: 3-Punkt-Gurte
- 21: Schultergurt
- 22: Schultergurt
- 23: Schrittgurt
- 24: Gurtschloss (3-Punkt)
- 25: Gurtschnalle
- 26: Gurtschnalle
- 27: Gurtschloss-Unterteil
- 28: Entriegelungstaste

- 30: Stück Textilgewebe
- 31: Vorderteil
- 32: linkes Seitenteil
- 33: rechtes Seitenteil
- 34: Rückteil
- 35: Flauschband
- 36: Hakenband

- 40: Hülle
- 41a: Aussparung
- 41b: Aussparung
- 41c: Aussparung

## Patentansprüche

1. Vorrichtung zur Sicherung des Gurtschlosses eines Kinderautositzes gegen Öffnen durch das angegurtete Kind, umfassend ein Stück zugeschnittenes Textilgewebe (30) mit
einem zentralen Vorderteil (31) zum Auflegen auf die Vorderseite des geschlossenen Gurtschlosses (24) so, dass zumindest die Entriegelungstaste (28) vollständig abgedeckt ist,
zwei Seitenteilen (32, 33), die um das Gurtschloss (24) herum nach hinten umklappbar sind und deren freie Enden auf der Rückseite des Gurtschlosses durch wenigstens einen reversiblen Schnellverschluss lösbar miteinander verbindbar sind,
einem mittig zwischen den beiden Seitenteilen (32, 33) angeordneten Rückteil (34), das ebenfalls um das Gurtschloss (24) herum nach hinten umklappbar ist und dessen freies Ende auf der Rückseite des Gurtschlosses an mindestens einem der umgeklappten und miteinander verbundenen Seitenteile mittels eines reversiblen Schnellverschlusses fixierbar ist.

2. Vorrichtung nach Anspruch 1, **dadurch gekennzeichnet, dass** die reversiblen Schnellverschlüsse als Klettverschlüsse ausgebildet sind.

3. Vorrichtung nach Anspruch 2, **dadurch gekennzeichnet, dass** die Enden der Seitenteile (32, 33) durch zwei nebeneinander angeordnete Klettverschlüsse verbindbar sind.

4. Vorrichtung nach Anspruch 2 oder 3, **dadurch gekennzeichnet, dass** auf der Oberseite des Stücks Textilgewebe (30) die Flauschbänder (35) und an der Unterseite die Hakenbänder (36) der Klettverschlüsse aufgenäht sind.

5. Vorrichtung nach einem der vorhergehenden Ansprüche, **dadurch gekennzeichnet, dass** das Textilgewebe (30) leicht elastisch ist.

6. Vorrichtung nach einem der vorhergehenden Ansprüche, **dadurch gekennzeichnet, dass** das Textilgewebe (30) eine Polsterung hat.

7. Vorrichtung nach einem der vorhergehenden Ansprüche, **dadurch gekennzeichnet, dass** das Textilgewebe (30) ein Meshgewebe mit Wabenstruktur umfasst.

8. Vorrichtung nach Anspruch 7, **dadurch gekennzeichnet, dass** das Textilgewebe (30) aus einer ersten Lage aus Meshgewebe und einer zweiten Lage aus glattem Stoff besteht, wobei das Meshgewebe nach außen weist.

9. Vorrichtung nach einem der vorhergehenden Ansprüche, **dadurch gekennzeichnet, dass** der Zuschnitt des Stücks Textilgewebe (30) an die Form des geschlossenen Gurtschlosses (24) derart angepasst ist, dass das Textilgewebe bei geschlossenen Schnellverschlüssen das Gurtschloss straff ummantelt.
